# FASCICULE DE BREVET EUROPEEN

(11) **EP 4 515 094 B1**
(45) Date de publication et mention de la délivrance du brevet: **18.03.2026**
(21) Numéro de dépôt: 23725755.5
(22) Date de dépôt: 26.04.2023
(51) Int. Cl.: F02C 7/268, F02C 7/32

(54) **BOÎTIER DE RELAIS D'ACCESSOIRES ET TURBOMACHINE D'AÉRONEF COMPORTANT UN TEL BOÎTIER.**
HILFSGETRIEBE UND FLUGZEUGTURBINENTRIEBWERK MIT EINEM SOLCHEN GETRIEBE
ACCESSORY GEARBOX AND AIRCRAFT TURBINE ENGINE COMPRISING SUCH A GEARBOX

(30) Priorité: 28.04.2022 FR 2204026
(43) Date de publication de la demande: 05.03.2025
(73) Titulaire: SAFRAN AIRCRAFT ENGINES, 75015 Paris (FR)
(72) Inventeur: ZSIGA, Zoltan, 77550 MOISSY-CRAMAYEL (FR); KARCHER, Gabriel, Aloys, 77550 MOISSY-CRAMAYEL (FR)
(74) Mandataire: Cabinet Beau de Loménie
(86) Numéro de dépôt international: PCT/FR2023/000057
(87) Numéro de publication internationale: WO 2023/209291

(56) Documents cités:
- WO-A1-2008/082335
- FR-A- 1 503 366
- FR-A1- 2 045 805
- US-A1- 2007 089 420

## Description

### Domaine technique

Le présent exposé concerne un boîtier de relais d'accessoires pour turbomachine d'aéronef et une turbomachine d'aéronef comprenant un tel boîtier de relais d'accessoires.

### Technique antérieure

Les turbomachines d'aéronef connues comprennent généralement un boîtier de relais d'accessoires ou AGB (connu en terminologie anglo-saxonne sous la dénomination «Accessory GearBox ») qui utilise le mouvement de l'arbre moteur pour entraîner différents accessoires tels que pompes à carburant, générateurs électriques, groupe de lubrification, démarreur, déshuileur et autres organes qui constituent l'ensemble des équipements auxiliaires du moteur et de génération de puissance de l'aéronef. Le document FR1503366A divulgue un boîtier de relais d'accessoires selon l'art antérieur.

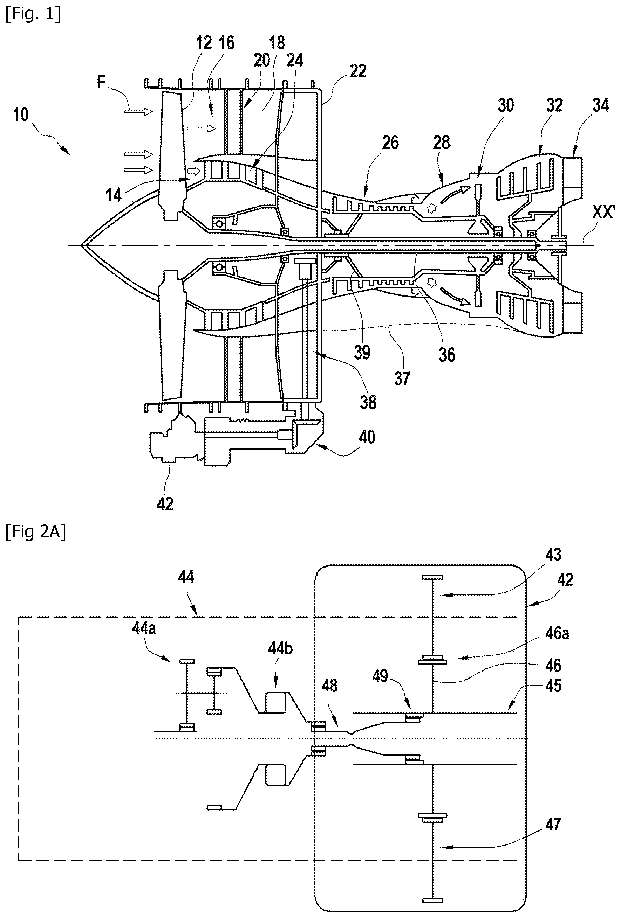

La figure 1 illustre, suivant une section longitudinale, une architecture connue de turbomachine d'aéronef (ici, par exemple il s'agit d'un turboréacteur à double flux) de forme longitudinale centrée autour d'un axe longitudinal XX'. La turbomachine 10 comprend, de manière générale, successivement d'amont en aval dans le sens de circulation du flux d'air illustré par les flèches F (c'est-à-dire de la gauche vers la droite sur la figure), une soufflante 12 (connue en terminologie anglo-saxonne sous le terme « fan ») qui fournit de l'air à une veine primaire 14 et à une veine secondaire 16 produisant l'essentiel de la force de poussée de la turbomachine, et qui est agencée de façon coaxiale par rapport à la veine primaire 14 dans un conduit annulaire 18. Ce conduit 18 comprend successivement d'amont en aval des aubes statoriques 20 et un carter structural intermédiaire 22.

La veine primaire 14 comprend successivement, d'amont en aval, un ou plusieurs étages de compression basse pression 24, un ou plusieurs étages de compression haute pression 26, une chambre de combustion 28, un ou plusieurs étages de turbine haute pression 30, un ou plusieurs étages de turbine basse pression 32 et un carter d'échappement dont on aperçoit les bras structuraux 34.

Comme représenté sur la figure, un arbre moteur basse pression 36 relie la turbine basse pression 32 au compresseur basse pression 24 et à la soufflante 12.

Un arbre radial 38 (logé dans un bras du carter intermédiaire 22) s'étend à partir d'un arbre moteur haute pression 39 (qui relie la turbine haute pression 30 au compresseur haute pression 26) jusqu'à une boîte de renvoi d'angle 40 qui, à son tour, est raccordée à un boîtier de relais d'accessoires 42.

Ainsi, le mouvement est transmis au boîtier de relais d'accessoires 42 à partir de l'arbre moteur haute pression 39, par l'intermédiaire de l'arbre radial 38 et de la boîte de renvoi d'angle 40.

Dans ce type d'architecture de turbomachine il existe un besoin permanent de chercher à réduire l'encombrement des différents composants et notamment du boîtier de relais d'accessoires équipé de ses accessoires.

En effet, l'encombrement axial d'un accessoire, c'est-à-dire l'encombrement de cet accessoire suivant une direction axiale parallèle à l'axe longitudinal XX' de la turbomachine, peut être rédhibitoire pour l'installation du boîtier de relais d'accessoires dans une turbomachine, que ce soit dans un compartiment inter-veines (voir la référence 37 sur la figure 1) ou dans un compartiment de soufflante comme c'est le cas sur la figure.

La présente invention vise ainsi à réduire l'encombrement axial global du boîtier de relais d'accessoires équipé d'accessoires.

### Exposé de l'invention

À cet effet, la présente invention propose une configuration de boîtier de relais d'accessoires pour turbomachine d'aéronef permettant notamment d'atteindre ce but, le boîtier de relais d'accessoires étant configuré pour s'interfacer avec un démarreur de la turbomachine qui est destiné à la mise en route de la turbomachine, le boîtier de relais d'accessoires comprenant :
un carter comprenant une première et une deuxième parois opposées, la première paroi étant destinée à s'interfacer avec le démarreur de la turbomachine,
un réducteur et une roue libre qui sont intégrés de manière permanente au carter et dédiés au démarreur de la turbomachine, une ligne d'arbre L1 dans le carter qui est dédiée au démarreur et qui comporte un arbre de pignon s'étendant entre les première et deuxième parois opposées, suivant une direction axiale perpendiculaire à la première paroi, l'arbre de pignon comportant deux extrémités opposées dont une première extrémité est disposée du côté de la première paroi du carter et la deuxième extrémité est disposée du côté de la deuxième paroi opposée du carter, la roue libre dédiée au démarreur étant disposée dans le carter du côté de la deuxième extrémité de l'arbre de pignon.

L'intégration dans le carter du boîtier de relais d'accessoires du réducteur et de la roue libre dédiés au démarreur de la turbomachine et qui, normalement, sont intégrés à ce démarreur, permet de réduire l'encombrement axial global du boîtier de relais d'accessoires équipé du démarreur. En particulier, l'encombrement axial du démarreur est ainsi réduit. Cet agencement permet ainsi de pouvoir installer plus facilement le boîtier de relais d'accessoires à différents endroits de la turbomachine, notamment dans le compartiment inter-veines ou dans le compartiment de soufflante. Par ailleurs, cet agencement permet de laisser de la place pour l'installation du réducteur du côté de la première paroi.

Selon d'autres caractéristiques possibles:
- la première paroi du carter comportant une zone qui est destinée à être traversée par un arbre de sortie du démarreur, l'arbre de pignon et la roue libre étant tous deux coaxiaux par rapport à un axe passant à l'intérieur de cette zone de la paroi ; cet axe est aligné avec l'arbre de sortie du démarreur qui traverse la paroi dans la zone concernée;
- la roue libre est montée à l'intérieur de l'arbre de pignon;
- la deuxième paroi opposée du carter est équipée extérieurement d'un port de commande manuelle (HCP) disposé dans l'alignement axial de la ligne d'arbre dédiée au démarreur et qui est configuré pour permettre, sur commande, lorsque la turbomachine est arrêtée au sol, l'entraînement manuel d'un système d'engrenages interne au carter;
- le port de commande manuelle (HCP) est connecté à un arbre d'entrainement raccordé à la roue libre dédiée au démarreur;
- le boîtier de relais d'accessoires comprend un joint d'étanchéité tournant entre le port de commande manuelle (HCP) et l'arbre d'entrainement;
- le boîtier de relais d'accessoires comprend à l'intérieur du carter un arbre de transmission s'étendant axialement à l'intérieur de l'arbre de pignon entre une première extrémité couplée au réducteur et une deuxième extrémité opposée qui s'étend jusqu'à la deuxième paroi opposée du carter pour être couplée à un équipement externe au carter;
- la deuxième extrémité opposée de l'arbre de transmission est destinée à être couplée à une pompe à huile externe au carter;
- la deuxième extrémité opposée de l'arbre de transmission est destinée à être couplée à un moteur électrique externe au carter et qui est dédié au fonctionnement de la turbomachine lorsque l'aéronef est au sol (ETM) ;
- la roue libre est montée à l'extérieur de l'arbre de pignon;
- la deuxième paroi opposée du carter comporte une excroissance externe qui s'étend axialement en éloignement du carter et qui permet de loger la roue libre ;
- le boîtier de relais d'accessoires comprend au moins une autre ligne d'arbre qui s'étend parallèlement à la direction axiale de la ligne d'arbre du démarreur et qui est destinée à s'interfacer avec un autre accessoire, la deuxième paroi opposée du carter étant destinée à s'interfacer avec cet autre accessoire ;
- l'arbre de pignon porte un voile qui est muni à sa périphérie d'une denture et qui est disposé à distance entre les deux extrémités opposées de l'arbre de pignon, la roue libre étant disposée entre le voile et la deuxième paroi opposée du carter ; cet agencement du voile permet d'entrainer (via le train d'engrenage couplé à une ou plusieurs lignes d'arbre de transmission) des accessoires disposés du côté de chacune des deux parois opposées du boitier, ce qui équilibre ainsi les portées sur la ou les lignes d'arbre ;
- le voile est disposé entre le réducteur et la roue libre ;
- le réducteur est disposé dans le carter du côté de la première extrémité de l'arbre de pignon;
- le réducteur est disposé à l'extérieur de l'arbre de pignon;
- le réducteur est disposé entre la première extrémité de l'arbre de pignon et la première paroi du carter ;
- le réducteur est couplé à un organe fusible disposé à l'intérieur de l'arbre de pignon.
L'invention a également pour objet un ensemble comprenant un boitier de relais d'accessoires pour turbomachine d'aéronef tel que brièvement exposé ci-dessus et un démarreur s'interfaçant avec le boitier, le démarreur comprenant un arbre de sortie disposé coaxialement à l'arbre de pignon.
L'invention a en outre pour objet une turbomachine d'aéronef comprenant un boîtier de relais d'accessoires de turbomachine d'aéronef tel que brièvement exposé ci-dessus ou un ensemble tel que brièvement exposé ci-dessus.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est une vue schématique en section longitudinale d'un turboréacteur selon l'art antérieur;
[Fig. 2A] La figure 2A est une vue schématique agrandie du boitier de relais d'accessoires de la figure 1 auquel est fixé un démarreur;
[Fig. 2B] La figure 2B est une vue schématique analogue à celle de la figure 2A montrant un nouvel agencement de boitier de relais d'accessoires et de démarreur selon un exemple de réalisation de l'invention;
[Fig. 3] La figure 3 est une vue schématique analogue à celle de la figure 2B montrant un boitier de relais d'accessoires selon un autre exemple de réalisation possible;
[Fig. 4] La figure 4 est une vue schématique analogue à celle de la figure 2B montrant un boitier de relais d'accessoires selon un autre exemple de réalisation possible;
[Fig. 5] La figure 5 est une vue schématique analogue à celle de la figure 2B montrant un boitier de relais d'accessoires selon un exemple forme de réalisation possible;
[Fig. 6] La figure 6 est une vue schématique analogue à celle de la figure 2B montrant un boitier de relais d'accessoires selon un autre exemple de réalisation possible.

### Description détaillée

La présente invention s'applique notamment à une turbomachine d'aéronef telle que celle représentée à la figure 1 et décrite ci-dessus.

Toutefois, l'invention peut s'appliquer à d'autres turbomachines telles que, par exemple, une turbomachine à simple corps, une turbomachine à soufflante non carénée, une machine triple corps, une turbine à gaz, un turbomoteur d'hélicoptère....

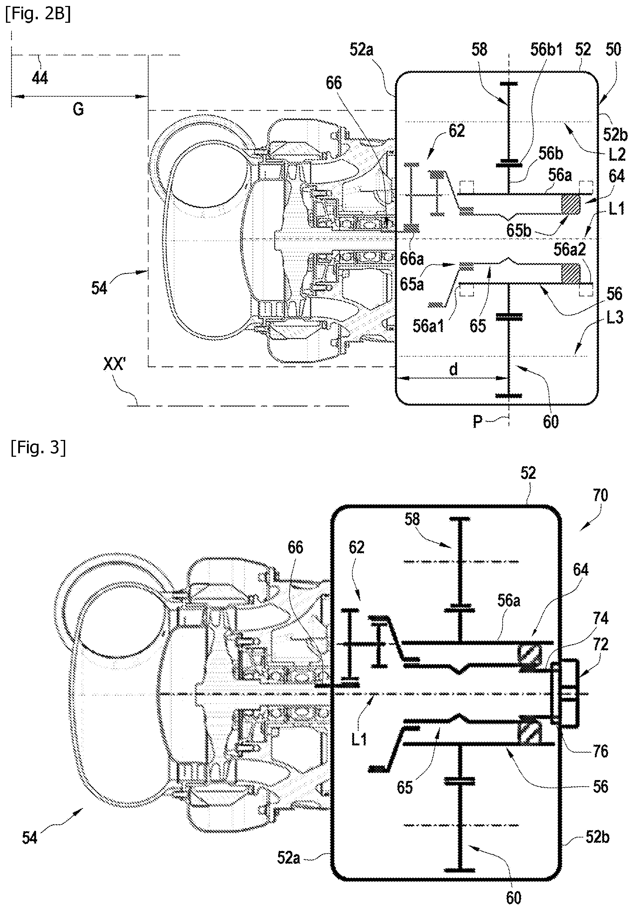

Les figures 2A et 2B sont des vues schématiques comparatives qui illustrent le principe à la base de l'invention.

Plus particulièrement, la figure 2A (art antérieur) représente schématiquement, suivant une vue axiale prise selon un axe parallèle à l'axe longitudinal XX' de la turbomachine illustré sur la figure 1 (axe déporté latéralement par rapport à l'axe XX'), le boîtier de relais d'accessoires 42 équipé d'un démarreur 44 de turbomachine disposé extérieurement au boîtier et décalé axialement par rapport au boîtier sur la gauche de celui-ci. Seuls le réducteur 44a et la roue libre 44b du démarreur 44 sont visibles sur la figure et sont représentés de manière très schématique à l'intérieur du démarreur qui est symbolisé par des traits pointillés. De manière connue, le démarreur 44 est destiné à la mise en route de la turbomachine pour que l'arbre moteur atteigne une vitesse de rotation suffisante.

De manière générale, le boîtier de relais d'accessoires 42 comprend une ligne d'arbre dédiée au démarreur 44, comprenant un arbre de pignon 45 s'étendant axialement à l'intérieur du boîtier et qui comporte, à la périphérie externe du voile 46 du pignon, une denture 46a permettant de s'engrener avec d'autres éléments d'engrenage du train d'engrenages du boitier dont deux élément, notés 43 et 47, sont représentés sur la figure, agencés sur deux autres lignes d'arbre parallèles.

Comme représenté sur la figure 2A, le réducteur 44a du démarreur 44 est raccordé à l'entrée de la roue libre 44b qui, à son tour, est raccordée à une extrémité d'une quille fusible pouvant être associée à un découpleur, lesquels sont représentés conjointement par la référence 48 au niveau d'une paroi du boîtier de relais d'accessoires 42 qui est située à l'interface entre le démarreur et le boîtier. La quille fusible 48 est disposée à l'intérieur du boîtier. Elle protège contre les sur-couples et présente localement une réduction de section (zone frangible) qui est configurée pour se rompre au cas où le couple mécanique appliqué par le démarreur au boîtier de relais d'accessoires dépasse un seuil prédéterminé. Le découpleur sert, quant à lui, à limiter le couple mécanique appliqué par le boîtier de relais d'accessoires au démarreur. On notera que la quille fusible et le découpleur ont des valeurs de seuils différentes.

L'autre extrémité de l'ensemble formé par la quille fusible et le découpleur 48 est raccordée à l'intérieur de l'arbre de pignon 45 par l'intermédiaire d'une interface cannelée 49.

La figure 2B illustre le principe de l'invention appliqué à la configuration de la figure 2A et montre comment cette configuration est modifiée.

Les références utilisées pour les éléments de la figure 2A ont été modifiées dans la mesure où le boîtier de relais d'accessoires et le démarreur ont tous deux été modifiés.

Le boîtier de relais d'accessoires 50 comprend un carter 52 à l'intérieur duquel sont logés les différents éléments du train d'engrenage permettant d'entraîner les différents accessoires montés sur le carter, à partir de la boîte de renvoi d'angle 40 de la figure 1.

Le boîtier 52 comprend deux parois opposées, à savoir une première paroi 52a et une deuxième paroi opposée 52b écartées axialement l'une de l'autre suivant la direction axiale parallèle à l'axe longitudinal XX' de la turbomachine (l'axe XX' est représenté sur la figure 2B uniquement pour rappeler l'orientation axiale mais son emplacement sur la turbomachine de la figure 1 est différent comme indiqué sur la figure 1).

La première paroi 52a est destinée à s'interfacer avec le démarreur 54 connu de la turbomachine entouré ici par des pointillés mais représenté de façon plus détaillée que sur la figure 2A.

Le boîtier de relais d'accessoires 50 comprend, à l'intérieur du carter 52, une ligne d'arbre L1 dédiée au démarreur 54 et qui comporte un pignon 56 comprenant un arbre de pignon 56a s'étendant entre les deux parois opposées 52a et 52b, parallèlement à la direction axiale de la ligne d'arbre L1 (et donc perpendiculairement aux parois). L'arbre de pignon 56a est creux et comporte deux extrémités opposées, dont une première extrémité 56a1 est disposée du côté de la première paroi 52a. La deuxième extrémité opposée 56a2 est, quant à elle, disposée du côté de la deuxième paroi opposée 52b du carter.

Le pignon 56 comprend également, à distance entre les deux extrémités opposées 56a1 et 56a2, un voile de pignon 56b qui s'étend radialement (dans un plan transversal perpendiculaire à la ligne d'arbre L1) et en éloignement de l'arbre de pignon 56a. Le voile de pignon 56b comporte, à sa périphérie externe, une denture 56b1 permettant de s'engrener avec d'autres éléments d'engrenage 58 et 60 (ex: pignons) disposés, à l'intérieur du carter, suivant d'autres lignes d'arbres d'entraînement respectivement L2 et L3 qui sont ici représentées parallèlement à la ligne d'arbre L1. Ces autres lignes d'arbres d'entraînement peuvent servir à entraîner d'autres accessoires (non représentés ici) montés sur le boîtier 50. En particulier, grâce à la position du voile 56b sur l'arbre de pignon 56a qui est telle que le voile est plus ou moins dans une position centrée par rapport aux deux parois opposées 52a, 52b du carter, des accessoires peuvent être disposés des deux côtés des parois (et notamment du côté du démarreur) sans créer de problème d'équilibrage des charges sur les arbres d'entrainement de ces accessoires.

Le carter 52 du boîtier de relais d'accessoires 50 intègre un réducteur 62 et une roue libre 64 qui sont tous deux dédiés au démarreur 54 de la turbomachine, contrairement à la figure 2A, où le réducteur 44a et la roue libre 44b sont logés à l'intérieur même du démarreur 44.

Comme représenté sur la figure 2B, la roue libre 64 est disposée dans le carter 52 du côté de la deuxième extrémité 56a2 de l'arbre de pignon 56a et est en prise avec l'arbre de pignon. Plus particulièrement, la roue libre 64 est disposée entre le voile 56b et la deuxième paroi 52b du carter. Le réducteur 62 est, quant à lui, disposé du côté de la première extrémité 56a1 de cet arbre et, plus particulièrement, entre cette première extrémité et la première paroi 52a, notamment à l'extérieur de l'arbre.

Dans l'exemple de réalisation représenté sur la figure 2B, la roue libre 64 est représentée montée à l'intérieur de l'arbre de pignon 56a mais elle peut toutefois être montée extérieurement à cet arbre.

Par ailleurs, le réducteur 62 est ici raccordé à une extrémité 65a d'une quille fusible et d'un découpleur représentés conjointement par la référence 65 et disposés à l'intérieur du carter 52.

L'autre extrémité 65b de l'ensemble 65 est raccordée à la roue libre 64, par exemple au moyeu de la roue libre tandis que le corps extérieur de la roue libre est raccordé à l'arbre de pignon 56a.

Du côté du réducteur 62 qui est orienté face à la première paroi 52a, un arbre 66 solidaire du démarreur 54, par exemple l'arbre de la turbine à air du démarreur, traverse une zone de la première paroi 52a pour pénétrer partiellement à l'intérieur du carter par une extrémité débouchante 66a. Cette extrémité 66a est munie d'une denture ou de tout autre moyen d'engrènement ou d'accouplement avec l'un des pignons du réducteur 62. Le réducteur a généralement une structure de train épicycloïdal et de nombreuses architectures peuvent être envisagées. L'extrémité 66a de l'arbre (le solaire) est reliée à des satellites, dont le nombre peut être compris entre 1 et 5 (en pratique plus souvent 3), qui peuvent avoir deux étages (deux dentures comme sur la figure) ou bien un seul étage (une seule denture dans une configuration non représentée). Ces satellites s'engrènent sur une couronne qui est reliée ici à l'extrémité 65a de la quille fusible (par des cannelures). Dans cette configuration la roue libre et l'arbre de pignon sont tous les deux montés de manière coaxiale autour d'un axe (fictif) qui prolonge l'arbre 66 de sortie du démarreur (dans son alignement), et notamment son extrémité 66a. Cet axe passe à l'intérieur de la zone de la paroi qui est traversée par l'arbre du démarreur. Dans le présent exemple de réalisation le réducteur du démarreur est à deux étages et est préférentiellement un réducteur épicycloïdal, auquel cas au moins trois pignons (62b et 62a) sont utilisés à chaque étage afin d'équilibrer les efforts radiaux. Dans ce cas, l'extrémité 66a de l'arbre de sortie 66 du démarreur, munie d'une denture, fait office de pignon solaire du réducteur épicycloïdal. Le réducteur étant coaxial à la roue libre et donc aussi à l'arbre de pignon, leur axe commun correspond à l'axe de l'arbre de sortie du démarreur.

L'intégration permanente dans le carter 52 du boîtier de relais d'accessoires 50 d'une partie du démarreur qui est formée par le réducteur 62 et la roue libre 64 a plusieurs conséquences :
- la distance entre les paliers de guidage (représentés par des pointillés aux deux extrémités de l'arbre sur la figure 2B) de l'arbre de pignon 56a de la ligne d'arbre L1 dédiée au démarreur est réduite par rapport à la configuration de la figure 2A ;
- le diamètre de l'arbre de pignon 56a (et donc le diamètre interne du voile 56b) est augmenté par rapport à la configuration de la figure 2A, tandis que le diamètre externe du voile ou diamètre de denture 56b1 reste inchangé ;
- la longueur de l'arbre de pignon 56a du côté du pignon qui est orienté vers le démarreur 54 (c'est-à-dire du côté de la première extrémité 56a1) est réduite par rapport à la configuration de la figure 2A ;
- l'encombrement axial du démarreur est réduit par rapport à la configuration de la figure 2A.

Malgré ces modifications, la distance d entre la première paroi 52a du carter et le plan P du train d'engrenages du carter est inchangée.

Il résulte également de cet agencement un gain G d'encombrement axial du boîtier de relais d'accessoires 50 équipé du démarreur 54 par rapport à la configuration de la figure 2A.

Cette réduction de l'encombrement axial est illustrée sur la figure 2B sur laquelle est partiellement illustré, dans la partie supérieure gauche, le démarreur 44 de la figure 2A pour les besoins de la comparaison.

La figure 3 illustre un exemple de réalisation selon l'invention qui reprend la configuration générale de la figure 2B (les références utilisées sur la figure 2B sont reprises pour les éléments qui sont inchangés) en ajoutant au boîtier de relais d'accessoires 70 une possibilité supplémentaire d'entrainement à partir de la ligne d'arbre L1 dédiée au démarreur 54.

Particulièrement, un port de commande manuelle HCP (connu en terminologie anglo-saxonne sous le terme "Hand Crank Port"), noté 72, est monté extérieurement sur la deuxième paroi 52b, dans l'alignement axial de la ligne d'arbre L1 et est configuré pour s'interfacer, sur commande, avec le système d'engrenage interne au carter et pour permettre, sur commande, l'entraînement manuel de ce système. Ce port de commande manuelle 72 n'est utilisé que lorsque l'aéronef est au sol, lors des opérations de maintenance.

Dans la configuration illustrée sur la figure 3, le port 72 est couplé à un arbre d'entraînement 74 qui s'étend à l'intérieur du carter et est raccordé à la roue libre 64 par une extrémité de cet arbre. L'extrémité opposée de l'arbre 74 est raccordée au port 72 et est utilisée seulement lors des opérations de maintenance, comme mentionné ci-dessus. Par ailleurs, un joint d'étanchéité tournant 76 est monté entre l'arbre 74 et le port de commande manuelle 72.

Ainsi, suite au démarrage de la turbomachine par le démarreur, lorsque le démarreur se déconnecte grâce à la roue libre 64, le train d'engrenages du boîtier de relais d'accessoires devient entrainé par la turbomachine, et de ce fait la fonction HCP est également déconnectée, ce qui permet de ne pas faire tourner l'arbre HCP 74 en fonctionnement normal du moteur.

Grâce à l'agencement décrit ci-dessus, le joint tournant 76 qui est installé est utilisé de manière épisodique (il ne tourne pas en permanence), uniquement lorsque la fonction HCP est requise. L'étanchéité du port de commande manuelle HCP peut donc être assurée par un joint tournant dont le coût et l'usure sont relativement réduits par rapport à un joint qui serait nécessairement dimensionné pour des vitesses supérieures si l'arbre HCP 74 devait continuer à tourner pendant le fonctionnement normal du moteur suite au démarrage.

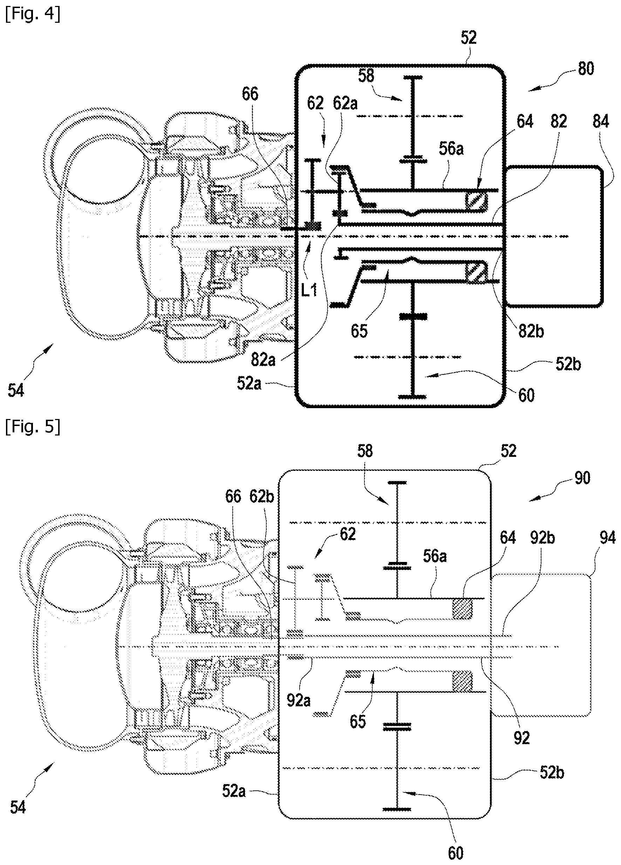

**La** figure 4 illustre un exemple de réalisation selon l'invention qui reprend la configuration générale de la figure 2B (les références utilisées sur la figure 2B sont reprises pour les éléments qui sont inchangés) en ajoutant au boîtier de relais d'accessoires 80 une possibilité supplémentaire d'entrainement à partir de la ligne d'arbre L1 dédiée au démarreur 54.

Plus particulièrement, un arbre de transmission 82 s'étend axialement à l'intérieur du carter 52, notamment à l'intérieur de l'arbre de pignon 56a, entre une première extrémité 82a de l'arbre couplée au réducteur 62, notamment à un pignon 62a (il s'agit ici du deuxième étage d'un satellite à deux étages) du réducteur, et une deuxième extrémité opposée 82b. La deuxième extrémité 82b s'étend jusqu'à la deuxième paroi opposée 52b du carter (et peut même faire saillie extérieurement au-delà de la paroi et donc du carter) pour être couplée à un équipement externe au carter tel qu'une pompe à huile 84.

L'équipement externe tel que la pompe à huile 84 est ainsi connecté à la sortie du réducteur 62 intégré au boîtier de relais d'accessoires 80.

Un tel agencement permet d'entraîner une pompe de faible capacité qui assure l'alimentation en huile lors d'une phase de lubrification dite marginale, réalisée uniquement à basse vitesse, c'est-à-dire notamment lors du démarrage de la turbomachine ou lors d'une phase de «motoring ». Cette phase est une phase de ventilation moteur au cours de laquelle le moteur (arbre HP) est entrainé à basse vitesse, au sol, par le démarreur ou un moteur électrique. Ceci permet de ventiler la chambre de combustion et d'amorcer le système de carburant de la turbomachine.

En effet, à basse vitesse de rotation du corps haute pression de la turbomachine, notamment lors du démarrage de celle-ci, la vitesse d'entraînement du train d'engrenage du boîtier de relais d'accessoires par le corps haute pression est insuffisante pour que le groupe de lubrification principal (incluant une pompe d'alimentation principale) monté sur le boîtier soit entraîné à sa vitesse nominale. La pompe d'alimentation principale du groupe n'est pas bien amorcée ou, en tout cas, ne fournit pas un débit suffisant pour assurer une lubrification correcte des différents organes de la turbomachine qui le nécessitent (notamment le réducteur du démarreur). Lors de la phase de ventilation moteur, le moteur tourne lentement alors que la pompe tourne vite (pompe amorcée). La pompe de faible capacité fournit ainsi le même débit que la pompe d'alimentation principale mais à un régime 10 à 20 fois inférieur à celui de la pompe d'alimentation principale.

Une pompe à huile de faible capacité telle que la pompe 84 de la figure 4 permet de remédier à cet inconvénient.

Une telle pompe est généralement déconnectée en fonctionnement normal du moteur, c'est-à-dire lorsque le démarreur est en mode déconnecté. Cet agencement permet de prendre en compte les besoins de lubrification marginale sans avoir à sur-dimensionner le groupe de lubrification principal de la turbomachine pour couvrir de tels besoins.

La figure 5 illustre un autre exemple de réalisation selon l'invention qui reprend la configuration générale de la figure 2B (les références utilisées sur la figure 2B sont reprises pour les éléments qui sont inchangés) en ajoutant au boîtier de relais d'accessoires 90 une possibilité supplémentaire d'entrainement à partir de la ligne d'arbre L1 dédiée au démarreur 54.

Plus particulièrement, un arbre de transmission 92 s'étend axialement à l'intérieur du carter 52, notamment à l'intérieur de l'arbre de pignon 56a, entre une première extrémité 92a de l'arbre couplée au réducteur 62, notamment à un pignon 62b du réducteur, et une deuxième extrémité opposée 92b. La deuxième extrémité 92b s'étend jusqu'à la deuxième paroi opposée 52b du carter qu'elle traverse pour faire saillie extérieurement au-delà de la paroi (et donc du carter) et pour être couplée à un équipement externe au carter tel qu'un moteur électrique dit ETM (connu en terminologie anglo-saxonne sous le terme "Engine Turning Motor") 94. Un tel moteur ETM est utilisé au sol afin de faire tourner l'arbre moteur de la turbomachine à très faible vitesse pendant un temps relativement long, ceci afin d'uniformiser la température du rotor et donc de réduire le gradient thermique présent sur ce rotor.

L'équipement externe tel que le moteur 94 est ainsi connecté à l'entrée du réducteur 62 intégré au boîtier de relais d'accessoires 90, entrée qui est déjà raccordée à l'arbre de turbine 66 du démarreur comme mentionné plus haut. Le réducteur 62 est en effet utilisé pour réduire la vitesse entre le moteur 94 de l'ETM qui a besoin de tourner vite et l'arbre 56a connecté à la sortie du réducteur 62. L'arbre 92 ne pourrait donc pas être connecté à un pignon tournant moins vite tel que le pignon de sortie du réducteur.

Cet agencement permet de mutualiser les besoins en réducteur du démarreur 54 et du moteur 94 en supprimant le réducteur propre du moteur 94 et en permettant à ce moteur d'utiliser le réducteur 62 du démarreur intégré au carter 52.

Par ailleurs, comme pour les précédentes configurations d'entraînement à partir de la ligne d'arbre L1 dédiée au démarreur, le moteur 94, qui n'est utilisé que lorsque l'aéronef est au sol, se déconnecte en fonctionnement normal du moteur de la turbomachine, ce qui permet de supprimer sa rotation et donc évite toute usure des ses pièces internes lorsque son utilisation n'est pas requise. Ainsi, sa fiabilité est augmentée. Alternativement, le coût de sa conception peut être revu à la baisse en raison d'une moindre usure de ses pièces internes.

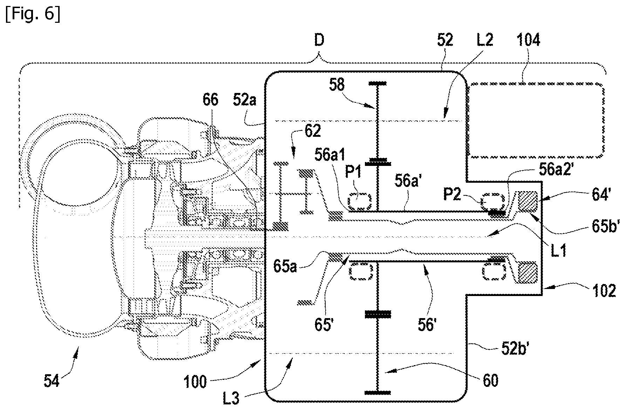

La figure 6 illustre un autre exemple de réalisation selon l'invention qui reprend sensiblement la configuration générale de la figure 2B (les références utilisées sur la figure 2B sont reprises pour les éléments qui sont inchangés) et modifie le boîtier de relais d'accessoires 100 en déportant axialement la roue libre 64' à l'extérieur de l'arbre de pignon 56a', toujours du côté de la deuxième extrémité opposée 56a2' de cet arbre.

Dans cette nouvelle configuration, l'arbre de pignon 56a' est allongé par rapport à la configuration de la figure 2B (la longueur de l'arbre de pignon 56a' est identique à la longueur de l'arbre 45 de la figure 2A) et la roue libre 64' est positionnée en bout d'arbre. La deuxième paroi 52b' du carter est modifiée afin de former une excroissance externe 102 (dans l'alignement de la ligne d'arbre L1) qui s'étend axialement en éloignement du carter (et de la première paroi 52a), ce qui permet de loger, dans cette excroissance axiale, l'extension axiale de l'arbre de pignon 56a' et la roue libre 64'. La deuxième extrémité 65b' de l'ensemble quille fusible et découpleur 65' est également modifiée pour suivre le déport de la roue libre 64' et est ainsi rallongée par rapport à la configuration de la figure 2B.

L'allongement de l'arbre de pignon 56a' a pour effet d'éloigner l'un de l'autre les paliers de guidage p1 et p2 de cet arbre qui sont disposés à ses deux extrémités opposées 56a1 et 56a2'. Cet agencement permet d'assurer un meilleur guidage de l'axe de rotation de cet arbre et donc de provoquer moins d'usure des dentures droites en raison d'un meilleur parallélisme entre les axes des arbres de pignon.

Par ailleurs, le déport axial de la roue libre 64' permet de ne pas augmenter le diamètre interne de l'arbre de pignon dédié au démarreur, ce qui permet de limiter sa masse.

Un tel agencement est envisageable sans augmenter l'encombrement axial de l'ensemble boîtier de relais d'accessoires 100 et accessoires équipant ce boitier dans la mesure où l'encombrement axial de l'excroissance 102 est inférieur à l'encombrement axial d'un accessoire ou équipement 104 monté sur une autre ligne d'arbre telle que la ligne L2 parallèle à la ligne L1, sur la même deuxième paroi 52b' que celle où est conformée l'excroissance axiale 102.

L'encombrement axial de l'ensemble boîtier de relais d'accessoires 100 et accessoires est noté D sur la figure 6.

Bien que la présente description se réfère à des exemples de réalisation spécifiques, des modifications peuvent être apportées à ces exemples sans sortir de la portée générale de l'invention telle que définie par les revendications. En outre, des caractéristiques individuelles des différents modes de réalisation illustrés ou mentionnés peuvent être combinées dans des modes de réalisation additionnels. Par conséquent, la description et les dessins doivent être considérés dans un sens illustratif plutôt que restrictif.

## Revendications

1. Boitier de relais d'accessoires (50 ; 70 ;80 ; 90 ; 100) pour turbomachine d'aéronef, le boîtier de relais d'accessoires étant configuré pour s'interfacer avec un démarreur (54) de la turbomachine qui est destiné à la mise en route de la turbomachine, le boîtier de relais d'accessoires comprenant :
un carter (52) comprenant une première et une deuxième parois opposées (52a,52b ; 52b'), la première paroi (52a) étant destinée à s'interfacer avec le démarreur (54) de la turbomachine,
un réducteur (62) et une roue libre (64 ;64') qui sont intégrés de manière permanente au carter et dédiés au démarreur de la turbomachine,
une ligne d'arbre (L1) dans le carter qui est dédiée au démarreur (54) et qui comporte un arbre de pignon (56a ; 56a') s'étendant entre les première et deuxième parois opposées (52a,52b ; 52b'), suivant une direction axiale perpendiculaire à la première paroi (52a), l'arbre de pignon (56a ; 56a') comportant deux extrémités opposées dont une première extrémité (56a1) est disposée du côté de la première paroi (52a) du carter et la deuxième extrémité (56a2; 56a2') est disposée du côté de la deuxième paroi opposée (52b ; 52b') du carter, le boitier étant **caractérisé en ce que** la roue libre (64 ; 64') dédiée au démarreur est disposée dans le carter du côté de la deuxième extrémité (56a2; 56a2') de l'arbre de pignon.

2. Boitier de relais d'accessoires (50; 70 ;80 ; 90 ; 100) pour turbomachine d'aéronef selon la revendication 1, dans lequel la première paroi (52a) du carter comporte une zone qui est destinée à être traversée par un arbre de sortie (66) du démarreur (54), l'arbre de pignon (56a ; 56a') et la roue libre (64 ; 64') étant tous deux coaxiaux par rapport à un axe passant à l'intérieur de cette zone de la paroi.

3. Boitier de relais d'accessoires (50; 70 ;80 ; 90) pour turbomachine d'aéronef selon la revendication 1 ou 2, dans lequel la roue libre (64) est montée à l'intérieur de l'arbre de pignon (56a).

4. Boitier de relais d'accessoires (50; 70 ;80 ; 90) pour turbomachine d'aéronef selon la revendication précédente, dans lequel la deuxième paroi opposée (52b) du carter est équipée extérieurement d'un port de commande manuelle (72) disposé dans l'alignement axial de la ligne d'arbre (L1) dédiée au démarreur (54) et qui est configuré pour permettre, sur commande lorsque la turbomachine est arrêtée au sol, l'entraînement manuel d'un système d'engrenages interne au carter.

5. Boitier de relais d'accessoires (50; 70 ;80 ; 90) pour turbomachine d'aéronef selon la revendication précédente, dans lequel le port de commande manuelle (72) est connecté à un arbre d'entrainement (74) raccordé à la roue libre (64) dédiée au démarreur.

6. Boitier de relais d'accessoires (80 ; 90) pour turbomachine d'aéronef selon la revendication 3, comprenant à l'intérieur du carter un arbre de transmission (82 ; 92) s'étendant axialement à l'intérieur de l'arbre de pignon (56a) entre une première extrémité (82a ; 92a) couplée au réducteur (62) et une deuxième extrémité opposée (82b ; 92b) qui s'étend jusqu'à la deuxième paroi opposée (52b) du carter pour être couplée à un équipement externe (84 ; 94) au carter.

7. Boitier de relais d'accessoires (90) pour turbomachine d'aéronef selon la revendication 6, dans lequel la deuxième extrémité opposée (92b) de l'arbre de transmission (92) est destinée à être couplée à un moteur électrique (94) externe au carter et qui est dédié au fonctionnement de la turbomachine lorsque l'aéronef est au sol.

8. Boitier de relais d'accessoires (100) pour turbomachine d'aéronef selon la revendication 1 ou 2, dans lequel la roue libre (64') est montée à l'extérieur de l'arbre de pignon (56a').

9. Boitier de relais d'accessoires (100) pour turbomachine d'aéronef selon la revendication précédente, comprenant au moins une autre ligne d'arbre (L2) qui s'étend parallèlement à la direction axiale de la ligne d'arbre (L1) du démarreur et qui est destinée à s'interfacer avec un autre accessoire (104), la deuxième paroi opposée (52b') du carter étant destinée à s'interfacer avec cet autre accessoire.

10. Boitier de relais d'accessoires (50; 70 ; 80 ; 90 ; 100) pour turbomachine d'aéronef selon l'une des revendications précédentes, dans lequel l'arbre de pignon (56a;56a') porte un voile (56b) qui est muni à sa périphérie d'une denture (56b1) et qui est disposé à distance entre les deux extrémités opposées (56a1, 56a2) de l'arbre de pignon, la roue libre (64; 64') étant disposée entre le voile (56b) et la deuxième paroi opposée (52b ; 52b') du carter.

11. Boitier de relais d'accessoires (50; 70 ; 80 ; 90 ; 100) pour turbomachine d'aéronef selon la revendication précédente, dans lequel le voile (56b) est disposé entre le réducteur (62) et la roue libre (64; 64').

12. Boitier de relais d'accessoires (50; 70 ; 80 ; 90 ; 100) pour turbomachine d'aéronef selon l'une des revendications précédentes, dans lequel le réducteur (62) est disposé dans le carter du côté de la première extrémité (56a1) de l'arbre de pignon (56a ;56a').

13. Boitier de relais d'accessoires (50; 70 ; 80 ; 90 ; 100) pour turbomachine d'aéronef selon la revendication précédente, dans lequel le réducteur (62) est disposé à l'extérieur de l'arbre de pignon (56a;56a').

14. Ensemble comprenant un boitier de relais d'accessoires (50; 70 ; 80 ; 90 ; 100) pour turbomachine d'aéronef selon l'une des revendications précédentes et un démarreur (54) s'interfaçant avec le boitier, le démarreur (54) comprenant un arbre de sortie (66) disposé coaxialement à l'arbre de pignon (56a ; 56a').

15. Turbomachine d'aéronef comprenant un boitier de relais d'accessoires (50; 70 ; 80 ; 90 ; 100) pour turbomachine d'aéronef selon l'une des revendications 1 à 13 ou un ensemble selon la revendication 14.

## Patentansprüche

1. Zubehör-Relaiskasten (50; 70; 80; 90; 100) für Flugzeugturbinentriebwerk, wobei der Zubehör-Relaiskasten konfiguriert ist, um mit einem Anlasser (54) des Turbinentriebwerks eine Schnittstelle zu bilden, die ausgelegt ist, um das Turbinentriebwerk zu starten, wobei der Zubehör-Relaiskasten Folgendes umfasst:
ein Gehäuse (52), umfassend eine erste und eine zweite gegenüberliegende Wand (52a, 52b, 52b'), wobei die erste Wand (52a) ausgelegt ist, um mit dem Anlasser (54) des Turbinentriebwerks eine Schnittstelle zu bilden,
ein Getriebe (62) und ein Freilaufrad (64, 64'), die auf permanente Wese in das Gehäuse integriert sind und dem Anlasser des Turbinentriebwerks zugewiesen sind,
einen Wellenstrang (L1) im Gehäuse, der dem Anlasser (54) zugewiesen ist, und der eine Ritzelwelle (56a, 56a') umfasst, die sich zwischen der ersten und zweiten gegenüberliegenden Wand (52a, 52b, 52b') gemäß einer axialer Richtung senkrecht zur ersten Wand (52a) erstreckt, wobei die Ritzelwelle (56a; 56a') zwei gegenüberliegende Enden umfasst, von denen ein erstes Ende (56a1) an der Seite der ersten Wand (52a) des Gehäuses angeordnet ist und das zweite Ende (56a2; 56a2') an der Seite der zweiten gegenüberliegenden Wand (52b; 52b') des Gehäuses angeordnet ist,
wobei der Kasten **dadurch gekennzeichnet ist, dass** das Freilaufrad (64; 64'), das dem Anlasser zugewiesen ist, im Gehäuse an der Seite des zweiten Endes (56a2; 56a2') der Ritzelwelle angeordnet ist.

2. Zubehör-Relaiskasten (50; 70; 80; 90; 100) für Flugzeugturbinentriebwerk nach Anspruch 1, wobei die erste Wand (52a) des Gehäuses einen Bereich umfasst, der ausgelegt ist, um von einer Abtriebswelle (66) des Anlassers (54) gequert zu werden, wobei die Ritzelwelle (56a; 56a') und das Freilaufrad (64; 64') beide koaxial mit Bezug auf eine Achse sind, die im Inneren dieses Bereichs der Wand verläuft.

3. Zubehör-Relaiskasten (50; 70; 80; 90) für Flugzeugturbinentriebwerk nach Anspruch 1 oder 2, wobei das Freilaufrad (64) im Inneren der Ritzelwelle (56a) montiert ist.

4. Zubehör-Relaiskasten (50; 70; 80; 90) für Flugzeugturbinentriebwerk nach dem vorhergehenden Anspruch, wobei die zweite gegenüberliegende Wand (52b) des Gehäuses außen mit einem manuellen Steueranschluss (72) ausgestattet ist, der in axialer Ausrichtung des Wellenstrangs (L1), der dem Anlassers (54) zugewiesen ist, angeordnet ist, und der konfiguriert ist, um auf Befehl, wenn das Turbinentriebwerk auf dem Boden stillsteht, die manuelle Betätigung eines Getriebesystems innerhalb des Gehäuses zu ermöglichen.

5. Zubehör-Relaiskasten (50; 70; 80; 90) für Flugzeugturbinentriebwerk nach dem vorhergehenden Anspruch, wobei der manuelle Steueranschluss (72) an eine Antriebswelle (74) angeschlossen ist, die mit dem Freilaufrad (64), das dem Anlasser zugewiesen ist, verbunden ist.

6. Zubehör-Relaiskasten (80; 90) für Flugzeugturbinentriebwerk nach Anspruch 3, umfassend, im Inneren des Gehäuses, eine Getriebewelle (82; 92), die sich axial im Inneren der Ritzelwelle (56a) zwischen einem ersten Ende (82a; 92a), das mit dem Getriebe (62) gekoppelt ist, und einem zweiten gegenüberliegenden Ende (82b; 92b) erstreckt, das sich bis zur zweiten gegenüberliegenden Wand (52b) des Gehäuses erstreckt, um mit einer Ausrüstung (84; 94) außerhalb des Gehäuses gekoppelt zu sein.

7. Zubehör-Relaiskasten (90) für Flugzeugturbinentriebwerk nach Anspruch 6, wobei das zweite gegenüberliegende Ende (92b) der Getriebewelle (92) ausgelegt ist, um mit einem elektrischen Motor (94) außerhalb des Gehäuses gekoppelt zu sein, und der dem Betrieb des Turbinentriebwerks zugewiesen ist, wenn sich das Flugzeug auf dem Boden befindet.

8. Zubehör-Relaiskasten (100) für Flugzeugturbinentriebwerk nach Anspruch 1 oder 2, wobei das Freilaufrad (64') außerhalb der Ritzelwelle (56a') montiert ist.

9. Zubehör-Relaiskasten (100) für Flugzeugturbinentriebwerk nach dem vorhergehenden Anspruch, umfassend mindestens einen weiteren Wellenstrang (L2), der sich parallel zur axialen Richtung des Wellenstrangs (L1) des Anlassers erstreckt, und der ausgelegt ist, um mit einem weiteren Zubehör (104) eine Schnittstelle zu bilden, wobei die zweite gegenüberliegende Wand (52b') des Gehäuses ausgelegt ist, um mit diesem weiteren Zubehör eine Schnittstelle zu bilden.

10. Zubehör-Relaiskasten (50; 70; 80; 90; 100) für Flugzeugturbinentriebwerk nach einem der vorhergehenden Ansprüche, wobei die Ritzelwelle (56a; 56a') einen Steg (56b) trägt, der an seinem Umfang mit Zähnen (56b1) ausgestattet ist, und der in einem Abstand zwischen den zwei gegenüberliegenden Enden (56a1, 56a2) der Ritzelwelle angeordnet ist, wobei das Freilaufrad (64; 64') zwischen dem Steg (56b) und der zweiten gegenüberliegenden Wand (52b; 52b') des Gehäuses angeordnet ist.

11. Zubehör-Relaiskasten (50; 70; 80; 90; 100) für Flugzeugturbinentriebwerk nach dem vorhergehenden Anspruch, wobei der Steg (56b) zwischen dem Getriebe (62) und dem Freilaufrad (64; 64') angeordnet ist.

12. Zubehör-Relaiskasten (50; 70; 80; 90; 100) für Flugzeugturbinentriebwerk nach einem der vorhergehenden Ansprüche, wobei das Getriebe (62) im Gehäuse an der Seite des ersten Endes (56a1) der Ritzelwelle (56a; 56a') angeordnet ist.

13. Zubehör-Relaiskasten (50; 70; 80; 90; 100) für Flugzeugturbinentriebwerk nach dem vorhergehenden Anspruch, wobei das Getriebe (62) außerhalb der Ritzelwelle (56a; 56a') angeordnet ist.

14. Einheit, umfassend einen Zubehör-Relaiskasten (50; 70; 80; 90; 100) für Flugzeugturbinentriebwerk nach einem der vorhergehenden Ansprüche und einen Anlasser (54), der mit dem Gehäuse eine Schnittstelle bildet, wobei der Anlasser (54) eine Abtriebswelle (66) umfasst, die koaxial zur Ritzelwelle (56a; 56a') angeordnet ist.

15. Flugzeugturbinentriebwerk, umfassend einen Zubehör-Relaiskasten (50; 70; 80; 90; 100) für Flugzeugturbinentriebwerk nach einem der Ansprüche 1 bis 13 oder eine Einheit nach Anspruch 14.

## Claims

1. An accessory gearbox (50; 70; 80; 90; 100) for an aircraft turbomachine, the accessory gearbox being configured to interface with a starter (54) of the turbomachine intended to start up the turbomachine, the accessory gearbox comprising:
a casing (52) comprising first and second opposite walls (52a, 52b; 52b'), the first wall (52a) being intended to interface with the starter (54) of the turbomachine,
a reduction gear (62) and a freewheel (64; 64') which are permanently integrated into the casing and dedicated to the starter of the turbomachine,
a shaft line (L1) in the casing which is dedicated to the starter (54) and which includes a pinion shaft (56a; 56a') extending between the first and second opposite walls (52a,52b; 52b'), in an axial direction perpendicular to the first wall (52a), the pinion shaft (56a; 56a') including two opposite ends, a first end (56a1) of which is disposed on the side of the first wall (52a) of the casing and a second end (56a2; 56a2') of which is disposed on the side of the second opposite wall (52b; 52b') of the casing, the casing being **characterized in that** the freewheel (64; 64') dedicated to the starter is disposed in the casing on the side of the second end (56a2; 56a2') of the pinion shaft.

2. The accessory gearbox (50; 70; 80; 90; 100) for an aircraft turbomachine according to claim 1, wherein the first wall (52a) of the casing includes an area which is intended to be crossed by an output shaft (66) of the starter (54), the pinion shaft (56a; 56a') and the freewheel (64; 64') both being coaxial with respect to an axis passing inside this area of the wall.

3. The accessory gearbox (50; 70; 80; 90) for an aircraft turbomachine according to claim 1 or 2, wherein the freewheel (64) is mounted inside the pinion shaft (56a).

4. The accessory gearbox (50; 70; 80; 90) for an aircraft turbomachine according to the preceding claim, wherein the second opposite wall (52b) of the casing is externally equipped with a hand crank port (72) disposed in the axial alignment with the shaft line (L1) dedicated to the starter (54) and which is configured to allow, on command, when the turbomachine is stopped on the ground, the manual driving of a gear system internal to the casing.

5. The accessory gearbox (50; 70; 80; 90) for an aircraft turbomachine according to the preceding claim, wherein the hand crank port (72) is connected to a driving shaft (74) connected to the freewheel (64) dedicated to the starter.

6. The accessory gearbox (80; 90) for an aircraft turbomachine according to claim 3, comprising inside the casing a transmission shaft (82; 92) extending axially inside the pinion shaft (56a) between a first end (82a; 92a) coupled to the reduction gear (62) and a second opposite end (82b; 92b) which extends to the second opposite wall (52b) of the casing to be coupled to equipment (84; 94) external to the casing.

7. The accessory gearbox (90) for an aircraft turbomachine according to claim 6, wherein the second opposite end (92b) of the transmission shaft (92) is intended to be coupled to an electric motor (94) external to the casing and which is dedicated to the operation of the turbomachine when the aircraft is on the ground.

8. The accessory gearbox (100) for an aircraft turbomachine according to claim 1 or 2, wherein the freewheel (64') is mounted outside the pinion shaft (56a').

9. The accessory gearbox (100) for an aircraft turbomachine according to the preceding claim, comprising at least one other shaft line (L2) which extends parallel to the axial direction of the shaft line (L1) of the starter and which is intended to interface with another accessory (104), the second opposite wall (52b') of the casing being intended to interface with this other accessory.

10. The accessory gearbox (50; 70; 80; 90; 100) for an aircraft turbomachine according to any of the preceding claims, wherein the pinion shaft (56a; 56a') carries a web (56b) which is provided at its periphery with a toothing (56b1) and which is disposed at a distance between the two opposite ends (56a1, 56a2) of the pinion shaft, the freewheel (64; 64') being disposed between the web (56b) and the second opposite wall (52b; 52b') of the casing.

11. The accessory gearbox (50; 70; 80; 90; 100) for an aircraft turbomachine according to the preceding claim, wherein the web (56b) is disposed between the reduction gear (62) and the freewheel (64; 64').

12. The accessory gearbox (50; 70; 80; 90; 100) for an aircraft turbomachine according to any of the preceding claims, wherein the reduction gear (62) is disposed in the casing on the side of the first end (56a1) of the pinion shaft (56a; 56a').

13. The accessory gearbox (50; 70; 80; 90; 100) for an aircraft turbomachine according to the preceding claim, wherein the reduction gear (62) is disposed outside the pinion shaft (56a; 56a').

14. An assembly comprising an accessory gearbox (50; 70; 80; 90; 100) for an aircraft turbomachine according to any of the preceding claims and a starter (54) interfacing with the gearbox, the starter (54) comprising an output shaft (66) disposed coaxially with the pinion shaft (56a; 56a').

15. An aircraft turbomachine comprising an accessory gearbox (50; 70; 80; 90; 100) for an aircraft turbomachine according to any of claims 1 to 13 or an assembly according to claim 14.
